# EUROPÄISCHE PATENTSCHRIFT

(11) **EP 0 874 705 B1**
(45) Veröffentlichungstag und Bekanntmachung des Hinweises auf die Patenterteilung: **19.04.2000**
(21) Anmeldenummer: 96944667.3
(22) Anmeldetag: 28.12.1996
(51) Int. Cl.: B23B 31/11

(54) **SPANNVORRICHTUNG**
CHUCKING DEVICE
DISPOSITIF DE SERRAGE

(30) Priorität: 05.01.1996 DE 19600239
(43) Veröffentlichungstag der Anmeldung: 04.11.1998
(73) Patentinhaber: Ima-Maschinenfabriken Klessmann GmbH, 32312 Lübbecke (DE); HOMAG MASCHINENBAU AG, D-72296 Schopfloch (DE)
(72) Erfinder: ROSE, Martin, D-32339 Espelkamp (DE); KALMBACH, Kurt, D-72293 Glatten (DE)
(74) Vertreter: Elbertzhagen, Otto, Dipl.-Ing.
(86) Internationale Anmeldenummer: EP9605853
(87) Internationale Veröffentlichungsnummer: WO9725173

(56) Entgegenhaltungen:
- DE-A- 3 642 132
- GB-A- 2 071 536

## Beschreibung

### TECHNISCHES GEBIET

Die Erfindung bezieht sich auf ein Aggregat für die spangebende Bearbeitung von Werkstücken aus Holz und/oder Holzaustauschstoffen der im Gattungsbegriff des Patentanspruchs 1 näher bezeichneten Art.

Solche Aggregate werden in Maschinen eingesetzt, die vornehmlich der Bearbeitung von Werkstücken für den Möbel- und Innenausbau dienen. Die Aggregate sitzen auf Supporten, die aufgrund hoher Bearbeitungsgeschwindigkeiten der Maschinen schnell bewegt werden müssen. Zur Erzielung einer hohen Bearbeitungsgenauigkeit müssen die Aggregate einerseits leicht sein. Andererseits müssen die Werkzeuge mit hohen Drehzahlen angetrieben werden, ohne ein Getriebe zwischenschalten zu können, so daß die Aggregate insgesamt eine kompakte Bauform bei hoher Leistung haben müssen. Die Durchmesser der Wellen der Antriebsmotore, auf deren Enden die Werkzeuge unmittelbar aufgenommen werden, sind folglich relativ klein und bewegen sich in der Größenordnung von 20 - 40 mm.

### STAND DER TECHNIK

Bei bekannten Bearbeitungsaggregaten der genannten Art ist der Aufnahmeabschnitt am Ende der Motorwelle zylindrisch ausgebildet, entsprechend ist die Aufnahmebohrung des Werkzeugs hohlzylindrisch und man verwendet zwischen diesen beiden Teilen eine Übergangspassung, mit der der Nachteil von Ungenauigkeiten im Rundlauf der Werkzeuge verbunden ist. Die exakter zentrierende Presspassung ist nicht verwendbar, weil die Werkzeuge öfter gewechselt werden müssen und somit nur unter nicht vertretbaren Umständen von den Motorwellen abgezogen werden könnten.

Andererseits ist es bekannt, bei Arbeitsspindeln von Werkzeugmaschinen oder dergl., die einen größeren Durchmesser haben und über ein Getriebe angetrieben sind, an der Schnittstelle zwischen Werkzeug und Spindelaufnahme konische Spannflächen vorzusehen, hierbei ist jedoch am Werkzeug ein Kegelstumpf und am Aufnahmeende der Spindel ein konischer Hohlschaft vorhanden. Für Wellen kleineren Durchmessers ist jedoch eine hohlkegelige Werkzeugaufnahme weniger geeignet, des weiteren würde der an den Werkzeugen angesetzte Kegelstumpf eine größere Baulänge bedingen.

Aus der deutschen Patentschrift 844 966 ist ferner ein elektrisch angetriebener Holzhandhobel bekannt, dessen Fräswerkzeug auf einem konischen Endabschnitt der Maschinenspindel angeordnet wird, wozu der Fräser eine passende, hohlkegelige Aufnahmeöffnung aufweist. Bei diesem Handgerät geht es ausschließlich um eine Zentrierung des Fräsers, nicht dagegen um eine Spanngenauigkeit, für die eine axiale Fixierung erforderlich wäre, und auch nicht um erhöhte Rundlaufeigenschaften. Vielmehr steht bei dem bekannten Holzhandhobel die leichte Auswechselbarkeit des vorzugsweise fliegend auf der Spindel angeordneten Fräsers im Vordergrund.

### DIE ERFINDUNG

Der Erfindung liegt die Aufgabe zugrunde, ein Aggregat der eingangs genannten Art zu schaffen, bei dem die Spanngenauigkeit und die Rundlaufeigenschaften des Werkzeugs verbessert sind, ohne daß der relativ geringe Durchmesser der Welle des Antriebsmotors vergrößert werden muß.

Diese Aufgabe wird nach der Erfindung durch die im Patentanspruch 1 angegebenen Merkmale gelöst.

Für die Erfindung ist wesentlich, für die neue Werkzeugaufnahme die Motorwelle in ihrer Dimension unverändert zu lassen, wobei anstelle des zylindrischen Aufnahmeabschnitts am Ende der Motorwelle der Kegelstumpf leicht angedreht werden kann. Zwar benötigt man für die erfindungsgemäße Werkzeugaufnahme ein unübliches Spezialwerkzeug, in das ein Hohlkegel eingearbeitet ist, dies wird jedoch durch eine kurze Bauform und verbesserte Rundlaufeigenschaften des Werkzeugs bei weitem aufgewogen.

Vorteilhafte Ausgestaltungsmerkmale der Erfindung ergeben sich aus den Unteransprüchen.

### KURZBESCHREIBUNG DER ZEICHNUNGSABBILDUNG

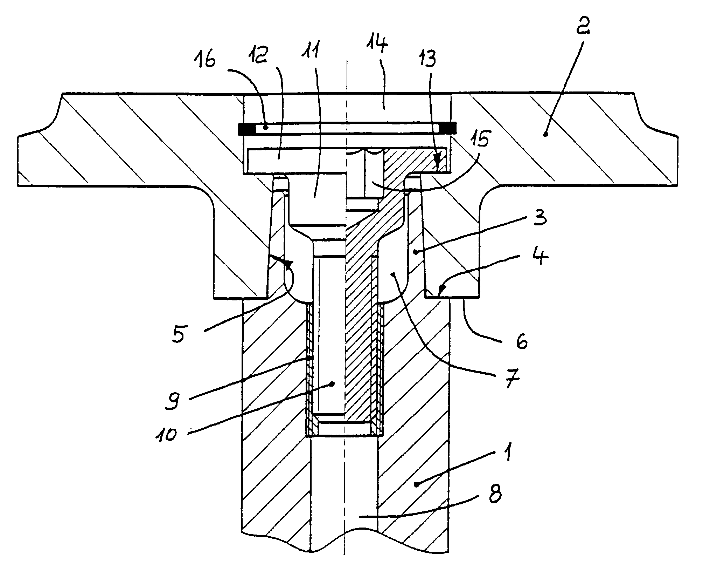

Die Erfindung wird nachfolgend anhand der Zeichnung an einem Ausführungsbeispiel noch näher erläutert. Die Zeichnung zeigt den Endabschnitt der Motorwelle eines Aggregates für die Bearbeitung eines Werkstückes mittels eines Fräsers, der auf der Motorwelle unmittelbar aufgenommen ist.

### BESTER WEGE ZUR AUSFÜHRUNG DER ERFINDUNG

Im einzelnen erkennt man in der Zeichnung die Motorwelle 1, die endseitig das Werkzeug 2 trägt. Dazu weist die Motorwelle 1 an ihrem Ende einen Kegelstumpf 3 auf, der einstükkig mit der Motorwelle 1 ist und entsprechend bei der Fertigung an die Motorwelle 1 angedreht werden kann. Der Durchmesser der Motorwelle 1 ist größer als der maximale Durchmesser des Kegelstumpfes 3, so ist zwischen der Motorwelle 1 und dem Kegelstumpf 3 ein Wellenabsatz 4 gebildet, der in einer Radialebene bezogen auf die Achse der Motorwelle 1 liegt.

Das Werkzeug 2, welches hier als Fräser dargestellt ist, ist in axialer Richtung durchbohrt und hat einen zur Aufnahmeseite hin liegenden Bohrungsabschnitt, der sich nach außen hin konisch erweitert und demgemäß als Hohlkegel 5 ausgebildet ist. Dieser Hohlkegel 5 hat die gleiche Kegelsteigung wie der Kegelstumpf 3 der Motorwelle 1, die Kegelsteigung beträgt etwa 1:10. Die axiale Länge des Hohlkegels 5 ist etwas größer als die des Kegelstumpfes 3 der Motorwelle 1, und es wird das Werkzeug 2 mit seinem Hohlkegel 5 soweit auf den Kegelstumpf 3 der Motorwelle 1 aufgeschoben, bis es mit seiner Stirnseite 6 an der Aufnahmeseite an dem Wellenabsatz 4 der Motorwelle 1 anschlägt. Hierbei wird der Kegelstumpf 3 der Motorwelle 1 geringfügig zusammengedrückt, er ist deshalb elastisch verformbar, was durch eine Aushöhlung 7 des Hohlkegels 3 begünstigt wird.

Die Aushöhlung 7 des Hohlkegels 3 schließt koaxial an eine axiale Bohrung 8 der Motorwelle 1 an, die im Endbereich als Gewindebohrung 9 ausgeführt ist. Darin ist eine Spannschraube 10 einschraubbar, die in ihrer Spannlage mit ihrem Kopf 11 bis in die Aushöhlung 7 des Kegelstumpfes 3 der Motorwelle 1 hineinragt. Am außenliegenden Ende hat die Spannschraube 10 einen im Durchmesser vergrößerten Kopfabschnitt 12, der gegen einen Innenabsatz 13 verspannbar ist, welcher zwischen dem innenliegenden Ende des Hohlkegels 5 und einem dagegen im Durchmesser größeren Bohrungsabschnitt 14 des Werkzeugs 2 gebildet ist.

In der Spannlage ist die Spannschraube 10 mit ihrem gesamten Kopf 11 einschließlich dem Kopfabschnitt 12 in den erweiterten Bohrungsabschnitt 14 des Werkzeugs 12 eingesenkt. In die Wandung des Bohrungsabschnittes 14, die entsprechend genutet ist, ist ein als Anschlag 16 dienender, üblicher Sicherungsring eingesetzt, der in radialer Richtung nach innen hin vorsteht und entsprechend den Bohrungsabschnitt 14 verengt. Hierdurch übergreift der Sicherungsring des Kopfabschnitt 12 der Spannschraube 10 in der Spannlage, entsprechend kann der Sicherungsring erst eingesetzt werden, wenn die Spannschraube 10 bereits eingeschraubt ist und sich in der Spannlage befindet. Beim Herausdrehen der Spannschraube 10, die dazu im Kopf 11 einenInnenvielkant 15 hat, in den durch den Sicherungsring hindurch ein Werkzeug eingesetzt werden kann, schlägt die Spannschraube 10 mit der Außenseite ihres Kopfabschnittes 12 an den Sicherungsring an. Beim weiteren Herausdrehen der Spannschraube 10 wird folglich über den Sicherungsring das Werkzeug 2 mitgenommen, es läßt sich somit trotz einer Verklemmung im konischen Passungsbereich leicht vom Kegelstumpf 3 der Motorwelle 1 abziehen.

## Patentansprüche

1. Aggregat für die spangebende Bearbeitung von Werkstukken aus Holz und/oder Holzaustauschstoffen, insbesondere Fräsaggregat, mit einem elektrischen Antriebsmotor, auf dessen Welle das Werkzeug unmittelbar aufgenommen ist, wozu am Wellenende ein an einen radialen Wellenabsatz im Durchmesser gegenüber der Welle kleinerer Aufnahmeabschnitt anschließt und das Werkzeug eine daran angepaßte Bohrung hat und ferner ein das Werkzeug gegen den Wellenabsatz verspannendes Spannmittel vorgesehen ist,
dadurch gekennzeichnet,
daß die Bohrung des Werkzeugs (2) zumindest im Aufnahmebereich als Hohlkegel (5) und der Aufnahmeabschnitt am Ende der Motorwelle (1) als hohler, beim Aufspannen des Hohlkegels (5) elastisch zusammendrückbarer Kegelstumpf (3) ausgebildet ist, wobei der Durchmesser der Motorwelle (1) größer als der maximale Durchmesser des Kegelstumpfes (3) ist.

2. Aggregat nach Anspruch 1,
dadurch gekennzeichnet,
daß die Kegelsteigung des Kegelstumpfes (3) der Motorwelle (1) sowie des Hohlkegels (5) etwa 1:10 beträgt.

3. Aggregat nach Anspruch 1 oder 2,
dadurch gekennzeichnet,
daß der Wellenabsatz (4) sich in einer Radialebene zur Achse der Motorwelle (1) erstreckt.

4. Aggregat nach einem der Ansprüche 1 bis 3,
dadurch gekennzeichnet,
daß die Motorwelle (1) eine axiale, zur freien Stirnseite des Kegelstumpfes (3) hin offene Gewindebohrung (9) zur Aufnahme einer durch das Werkzeug (2) hindurchführbaren Spannschraube (10) hat.

5. Aggregat nach einem der Ansprüche 1 bis 4,
dadurch gekennzeichnet,
daß die Spannschraube (10) in der Spannlage mit ihrem Kopf (11) in einem Bohrungsabschnitt (14) des Werkzeugs (2) versenkt angeordnet ist und im Bohrungsabschnitt (14) ein in den Schraubweg des Kopfes (11) der Spannschraube (2) vorstehender, diesen in der Spannlage außenseitig übergreifender Anschlag (16) vorgesehen ist.

6. Aggregat nach Anspruch 5,
dadurch gekennzeichnet,
daß der Anschlag (16) ein in die Wandung des Bohrungsabschnittes (14) des Werkzeuges (2) einsetzbarer, nach innen vorstehender Sicherungsring ist.

## Claims

1. Chucking device for the processing of workpieces made from wood and/or wood substitute substances, in particular milling aggregate, with an electric drive motor, on the shaft of which the tool is directly mounted, for which on the shaft end on a radial shaft shoulder a mounting section with a smaller diameter than the shaft connects, and the tool has a bore suited thereto, and furthermore there is a means of tensioning which tensions the tool against the shaft shoulder
characterised in that
the bore of the tool (2) is formed at least in the mounting area as a hollow cone (5) and the mounting section at the end of the motor shaft (1) is formed as a hollow truncated cone which can be elastically compressed upon stretching of the hollow cone (5), wherein the diameter of the motor shaft (1) is greater than the maximum diameter of the truncated cone (3).

2. Device according to Claim 1
characterised in that
the cone gradient of the truncated cone (3) of the motor shaft (1) and of the hollow cone (5) is about 1:10.

3. Device according to Claim 1 or Claim 2
characterised in that
the shaft shoulder (4) extends in a radial plane to the axis of the motor shaft (1).

4. Device according to one of the Claims 1 to 3
characterised in that
the motor shaft (1) has an axial threaded bore (9) opening to the free front side of the truncated cone (3) receiving a tension screw (10) running through the tool (2).

5. Device according to one of the Claims 1 to 4
characterised in that
the head (11) of the tension screw (10) is sunken in the tightened position in a bore section (14) of the tool (2) and in the bore section (14) there is a stop (16) protruding into the screw passage of the head (11) of the tension screw (2), which overlaps the head externally in the tightened position.

6. Device according to Claim 5
characterised in that
the stop (16) is an inward protruding security ring which can be introduced into the wall of the bore section (14) of the tool (2).

## Revendications

1. Dispositif de serrage pour le traitement, avec production de copeaux, de pièces à usiner en bois et/ou en matières plastiques, notamment groupes de fraisage comprenant un moteur de commande électrique, sur l'arbre duquel l'outil est directement placé, un secteur de réception de diamètre inférieur à celui de l'arbre prolongeant l'extrémité de l'arbre à un épaulement radial de celui-ci et l'outil étant pourvu d'un trou adéquat et un auxiliaire de serrage étant prévu, en plus, pour presser l'outil contre l'épaulement de l'arbre,
caractérisé en ce que
le trou de l'outil (2) est conçu, au moins dans la zone de réception, en forme de cône creux (5) et le secteur de réception, situé à l'extrémité de l'arbre (1) du moteur étant conçu en forme de cône tronqué (3) creux, contractable élatiquement lors du serrage du cône creux (5), le diamètre de l'arbre (1) du moteur étant supérieur au diamètre maximal du cône tronqué (3).

2. Dispositif de serrage selon la revendication 1,
caractérisé en ce que
l'obliquité du cône tronqué (3) de l'arbre (1) du moteur ainsi que du cône creux (5) est d'environ 1:10.

3. Dispositif de serrage selon la revendication 1 ou 2,
caractérisé en ce que
l'épaulement (4) de l'abre s'étend sur un plan radial par rapport à l'axe de l'arbre (1) du moteur.

4. Dispositif de serrage selon l'une des revendications 1 à 3,
caractérisé en ce que
l'arbre (1) du moteur est pourvu d'un trou taraudé (9) ouvert vers la partie frontale libre du cône tronqué (3) en vue d'accueillir une vis de serrage (10) qui peut pénétrer dans l'outil (2).

5. Dispositif de serrage selon l'une des revendications 1 à 4,
caractérisé en ce que
la tête (11) de la vis de serrage (10) en position serrée est noyée dans un zone (14) de la forure de l'outil (2) et qu'une butée (16), surplombant le parcours de la tête (11) de la vis de serrage (10) et saisissant celle-ci extérieurement, en position de serrage, est prévue dans la zone (14).

6. Dispositif selon la revendication 5,
caractérisé en ce que
la butée (16) est un anneau de sécurité en saillie vers l'intérieur et insérable dans la paroi du secteur (14) de la forure de l'outil (2).
